# EUROPEAN PATENT SPECIFICATION

(11) **EP 2 563 697 B1**
(45) Date of publication and mention of the grant of the patent: **21.02.2018**
(21) Application number: 11720342.2
(22) Date of filing: 28.04.2011
(51) Int. Cl.: B65G 67/20, B66F 9/19

(54) **LOADING DEVICE, SYSTEM AND METHOD FOR DISPLACING GOODS**
LADEVORRICHTUNG, SYSTEM UND VERFAHREN ZUR VERLAGERUNG VON WAREN
DISPOSITIF DE CHARGEMENT, SYSTÈME ET PROCÉDÉ POUR DÉPLACER DES PRODUITS

(30) Priority: 29.04.2010 NL 2004634
(43) Date of publication of application: 06.03.2013
(73) Proprietor: Gebr. Meijer St. Jabik B.V., 9079 NG Sint Jacobiparochie (NL)
(72) Inventor: MEIJER, Hendrik, NL-9075 NH Westhoek (NL); DE GRAAF, Folkert, NL-9033 BN Deinum (NL)
(74) Representative: Verdijck, Gerardus
(86) International application number: PCT/NL2011/050289
(87) International publication number: WO 2011/142662

(56) References cited:
- EP-A1- 1 967 484
- EP-A2- 1 760 032
- WO-A1-2005/049461
- DE-A1- 4 321 314
- US-A- 4 355 940
- US-A- 4 815 927
- US-A- 5 186 596
- US-A- 5 403 024
- US-A1- 2004 191 047
- US-A1- 2005 042 069
- US-A1- 2007 201 971

## Description

The present invention relates to a loading device for displacing goods such as containers, goods on the pallet and in particular elongate cargo.

For displacement of goods on for instance a pallet use is made in practice of forklift trucks and other vehicles. Using such a forklift truck these pallets are displaced and carried to the desired destination. Displacement of for instance goods on pallets or palletless elongate cargo in this way therefore requires the use of relatively costly material such as forklift trucks. Special regulations are moreover applicable for the use of these forklift trucks in the Netherlands and other countries, whereby they can be employed less efficiently. The displacement of goods with a forklift truck moreover requires a relatively large space for manoeuvring in order to get the goods to the desired position.

US 2007/0201971 discloses a loading device according to the preamble of claim 1, comprising a double roller device and a frame having a carrying surface for supporting auxiliary transport means.

The present invention has for its object to provide a more efficient device for displacing goods, including placing of particularly palletless elongate cargo in efficient manner in a container for further transport.

This object is achieved with a loading device according to claim 1.

Providing the loading device with a base frame enables a cargo to be carried by the loading device. The strength of the base frame also determines the maximum load resulting from the goods for displacement. The base frame is preferably provided with a carrying surface or supporting surface with which a good support of the goods for displacement is realized on the one hand and the components of the loading device are protected on the other. The loading device is further provided with support wheels connected to the base frame. It is possible using the support wheels to move the loading device over a ground surface. Providing the support wheels for movement relative to the base frame using a mechanical, hydraulic or pneumatic drive, which can take an automatic and/or hand-operated form, achieves that the support wheels can move downward and/or upward relative to the base frame. It is hereby possible using the loading device according to the invention to displace goods in relatively simple manner such that the support wheels form the contact between the ground surface and the loading device. When the support wheels are moved upward relative to the base frame, a more intensive contact is obtained between the loading device and the ground surface, this being particularly relevant during the actual picking up or setting down of the goods.

The loading device according to the present invention is further provided with one or more coupling elements. These coupling elements make it possible to connect the loading device to another loading device. The loading device according to the invention can be connected to a number of loading devices simultaneously. The coupling elements preferably comprise connecting elements for connecting the loading device in width direction of the loading device to another loading device. The coupling means therefore preferably comprise rapid-action couplings for mutual connection of loading devices in efficient manner. Using the coupling elements the size of the whole carrying surface of the coupled loading devices can be geared to the goods to be displaced. For elongate cargo fitting into a standard type of container, four loading devices in width direction and eight loading devices in lengthwise direction can for instance thus be coupled in order to thereby fully support and displace such cargo to a container. It is also possible to couple for instance a row or train of loading devices successively in lengthwise direction, optionally with a small interspace for manoeuvring purposes, wherein two loading devices are coupled in width direction.

An additional advantage of the loading device according to the invention is the possibility of palletless displacement, i.e. without pallet, and carrying of goods into for instance a container or truck. Loading space for instance can hereby be utilized more efficiently. Preferably in addition to the connection of a loading device to one or more other loading devices, the coupling elements also enable a connection to a vehicle. The connection of the loading device according to the invention to a vehicle, preferably a lift truck or a pallet truck, achieves that the loading device(s) are displaceable in simple manner. Such a combination can particularly move in relatively simple manner between for instance warehouse racks in order to pick orders in efficient manner. According to the present invention the loading device is provided with at least one double roller device arranged in lengthwise direction, wherein the double roller device comprises a number of first roller elements located a regular distance from each other and provided with a first roller surface, and a number of second roller elements located above the first roller elements and provided with a second roller surface, wherein during use the first roller surface lies against the second roller surface and wherein the roller elements are movable in guided manner in vertical direction relative to the frame so that the second roller elements protrude in selective manner above a carrying surface of the base frame.

When one of the two rows of rollers is in contact with the ground surface, they will during displacement of the loading device begin to roll in a direction corresponding to the direction of displacement of the loading device. Since the roller surfaces of the first and second roller elements lie against each other, the roller elements of this second row will then also begin to move, although in a direction opposite to the rolling direction of the first row. The second row hereby rotates in a direction opposite to the direction of displacement of the loading device. This effectively means that during displacement of the loading device goods placed on the loading device will not be displaced relative to the ground surface when these goods rest on the second row of roller elements. This achieves that goods can be set down in relatively simple manner at the desired position. The displaced goods can also be picked up relatively easily with the loading device according to the invention. Few additional operations are required here, whereby goods can be displaced in efficient manner. An additional advantage is that the manoeuvring space required for the loading device according to the invention also remains very limited. An efficient displacement is hereby also made possible. In addition, relatively simple operations by a user suffice for displacement of goods using the loading device according to the invention. This likewise increases the efficiency of such a displacement.

By displacing the support wheels in a substantially vertical direction relative to the support frame it is possible to deliberately cause the lower row of roller elements of the loading device to come into contact with the ground surface or, conversely, prevent this. The first row of rollers are in this case advantageously in contact with the ground surface close to the location where goods are picked up or set down. During the actual displacement from the pick-up point to the set-down point it will be precisely the support wheels which are in contact with the ground surface to thereby enable a simple displacement of the goods such that the goods are carried in a stable manner by the support frame.

In an advantageous preferred embodiment according to the invention the roller elements are guided in a vertical direction in a guide during use of the loading device as a result of the movement of the support wheels in a substantially vertical direction.

The guide makes it possible during the displacement of the loading device from the pick-up point to the set-down point using the support wheels to allow the roller elements to drop to some extent in vertical direction relative to the base frame such that the goods are supported by the carrying surface of the base frame. At the pick-up point and/or the set-down point the support wheel is as it were folded away relative to the base frame and the lower row of roller elements are in contact with the ground surface. According to the invention the second row of roller elements protrudes in a selective manner above the carrying surface of the base frame such that the goods for displacement are supported by this second row of roller elements. This enables efficient picking-up and setting down of goods. A displacement of goods in efficient manner is hereby realized.

A particular advantage obtained by using the loading device according to the invention provided is that for instance elongate goods can be placed palletless in a container or truck. It is possible here to dispense with the use of a lift truck with long forks. In addition, a lift truck for loading purposes can remain outside the container or truck. The loading space is further also used more efficiently.

In an advantageous preferred embodiment according to the present invention the drive for moving the at least one support wheel comprises a cylinder.

By realizing the upward and/or downward movement of the support wheel using a preferably hydraulic cylinder, the support wheel can be moved relative to the base frame. It is possible here in the downward movement of the support wheel relative to the base frame to make use in advantageous manner of gravitational force, further enhanced by a possible loading of the device by a cargo for displacement, such that the required energy supply can remain limited.

In an advantageous preferred embodiment the cylinder comprises a double-action cylinder.

Such a cylinder achieves that a controlled force can be exerted in all directions of movement of the support wheel relative to the base frame, and the goods for displacement can indeed be displaced in a controlled manner. It is also a possibility to have a single cylinder drive two (or more) support wheels. These two (or more) support wheels are preferably provided at different outer ends of the device. The movement of the combined support wheels of the device can hereby be performed in advantageous manner using a single cylinder.

In an advantageous preferred embodiment according to the present invention the coupling elements comprise connecting elements for connecting a loading device to a second loading device in a width direction. These connecting elements are preferably provided such that, in the case of coupling of two or more loading devices, a controlled play can be provided for the purpose of compensating unevenness in a ground surface. By giving the coupling elements some play, for instance around a rotation axis in the plane of the carrying surface of the loading device, coupled loading devices can move to some extent relative to each other. This achieves that for instance unevenness in a ground surface can be compensated. Such unevenness includes for instance ramps, guide rails provided in the ground surface, holes and so on. The play is preferably provided between coupled loading devices in lengthwise direction as well as in width direction of the coupled loading device. According to the present invention the drive of the support wheels comprises coupling means for operative connection to the drive of a second loading device.

Operative connection to each other of the drives of different loading devices coupled during use using for instance rapid-action couplings achieves that the different drives of the different loading devices which are operatively connected during use can be controlled simultaneously. It is hereby possible for instance, in the case for instance elongate cargo is being displaced, to switch these loading devices substantially simultaneously as a whole from a travel mode, in which the cargo is supported particularly by the support wheels, to a pick-up/set-down mode in which the cargo is supported substantially by the roller elements.

In a further advantageous preferred embodiment according to the present invention a guide is provided in lengthwise direction and/or width direction of the base frame for passage of cables and/or conduits.

Providing a guide makes it possible to place for instance cables for control signals and/or conduits for control of the cylinders in a controlled manner in the loading device. In the case loading devices are coupled during use, the guides preferably connect to each other such that the cables and/or conduits can as it were be fed through in simple manner. The cables and/or conduits are preferably provided as standard in the loading device and are connected using for instance rapid-action couplings or fed through. The guides ensure that cables and conduits cannot become entangled with other components of the loading device. In addition, the guides also ensure that coupling of loading devices can be performed in efficient manner. Particularly advantageous here is that such a coupling can be performed without much prior knowledge of the operation of the loading device being required.

In a further advantageous preferred embodiment according to the present invention there is an insertion point for pick-up of goods for displacement.

Particularly for picking up goods from the pick-up point use can advantageously be made of a kind of insertion point or pick-up point situated on the leading loading device or leading row of loading devices, depending on the possible number of coupled loading devices. A product can hereby be picked up and transported to the carrying surface of the loading device in simple manner. Use can be made here in advantageous manner of the roller device as discussed above. The insertion point can be provided in fixed manner as well as in removable manner on the loading device. Such an insertion point is preferably removable. This achieves that one type of loading device can be used, wherein if desired the leading loading devices are provided with such an insertion point for picking up, and optionally setting down, the goods for displacement.

In a further advantageous preferred embodiment according to the present invention a pushing system is provided for placing a spacer under displaced goods.

By providing a pushing system, formed for instance by a cylinder, and a rod or strip it is possible to provide a spacer, for instance a beam, at the correct location and at the right moment under goods during setting down of these goods. Goods can hereby be easily picked up again for further operations.

The invention also relates to a system according to claim 8 and a combination of vehicle and train according to claim 9. Such a system and combination provide the same effects and advantages as those described in respect of the loading device. In advantageous manner such a system or combination, preferably provided with coupled drives, can be controlled centrally, or in any case remotely, by a user. It is also possible for such a system or combination to function wholly autonomously. Use is made here of a control unit which provides for control of the device. The user-friendliness of the system, combination and loading device according to the invention is hereby further enhanced.

The invention further relates to a method for displacing goods, comprising the steps of:
- selecting the required number of loading devices as described above;
- forming a system or a combination of vehicle and train as described above; and
- displacing goods.

Such a method provides the same effects and advantages as those described in respect of the device and the system. In an embodiment wherein loading devices according to the invention are placed successively, these can be used in efficient manner to pick orders from warehouse racks. The order, for instance on a pallet, is taken out of the warehouse rack and placed on the leading loading device. As the loading device are provided with a double roller device the order on the leading loading device with folded-away support wheels is automatically rolled through to the second loading device. This achieves that the first loading device is once again left clear for placing of the following order thereon. When the train or row of loading devices has to be displaced further, preferably driven hydraulically by the vehicle such as a lift truck, the support wheel of the loading device is lowered. The orders then remain positioned on the loading device. Once all goods have been taken out of the warehouse racks, the train or row of loading devices can be taken for instance to a central pathway for further transport, or be immediately further transported, for instance to a loading/unloading station of a distribution centre for the purpose of placing the goods in a truck.

Further advantages, futures and details of the invention are elucidated on the basis of preferred embodiments thereof, wherein reference is made to the accompanying drawings, in which:
- figure 1 shows a view of the loading device according to the invention during use;
- figure 2 is a view of a system comprising loading devices as shown in figure 1;
- figure 3 shows a view of the coupling of the loading devices of figure 2;
- figure 4 shows a view of a loading device according to the invention;
- figure 5 shows a view of the system of figure 2 coupled to a lift truck;
- figure 6 is a top view of the coupled system of figure 5; and
- figure 7 is a view of an alternatively coupled system.

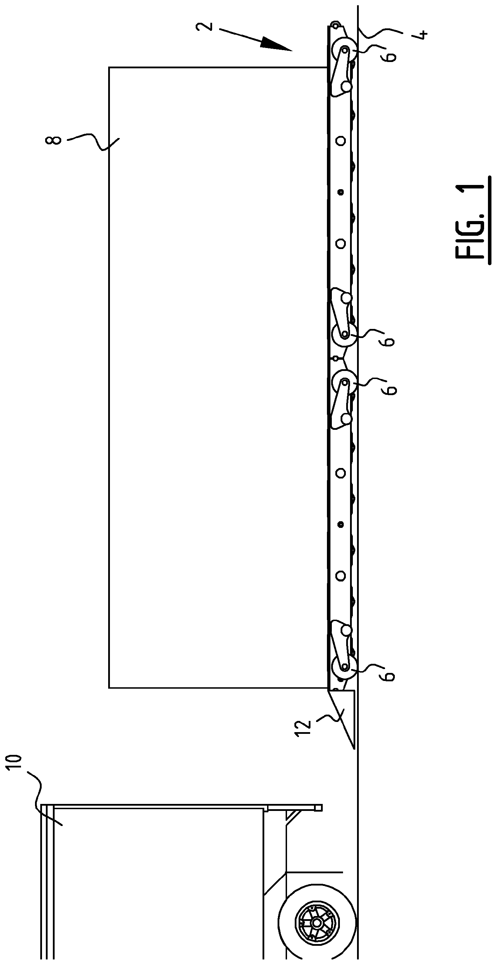

A loading device 2 (figure 1) is displaceable relative to ground surface 4 using support wheels 6. In the shown embodiment these support wheels 6 are shown as a whole together with the lowering mechanism. Placed on the upper side of loading device 2 is an elongate cargo 8 which is being moved relative to truck 10. Provided on one side of loading device 2 in the shown embodiment is an insertion point or pick-up point 12 with which elongate cargo 8 can be picked up in simple manner.

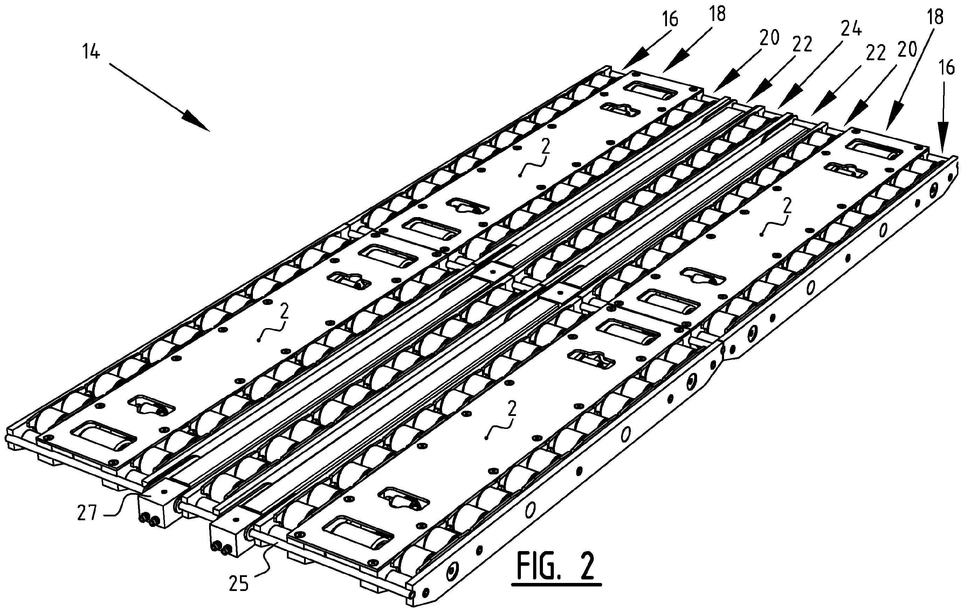

In the shown embodiment a system 14 (figure 2) comprises four loading devices 2. Loading device 2 is provided here with a first side part 16, a middle part 18, a second side part 20 and a gutter 22. A connecting part 24 is situated between gutters 22 of two adjacent loading devices 2. Loading devices 2 are mutually connected with a connecting shaft 25 situated at the outer ends of loading device 2 on either side thereof. A rapid-action coupling 27 is also provided on connecting shaft 25.

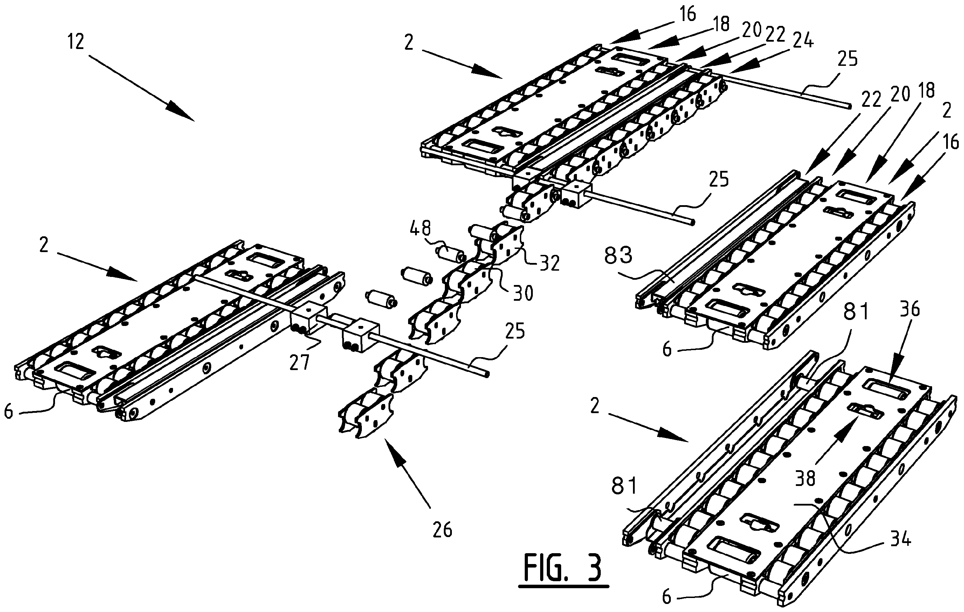

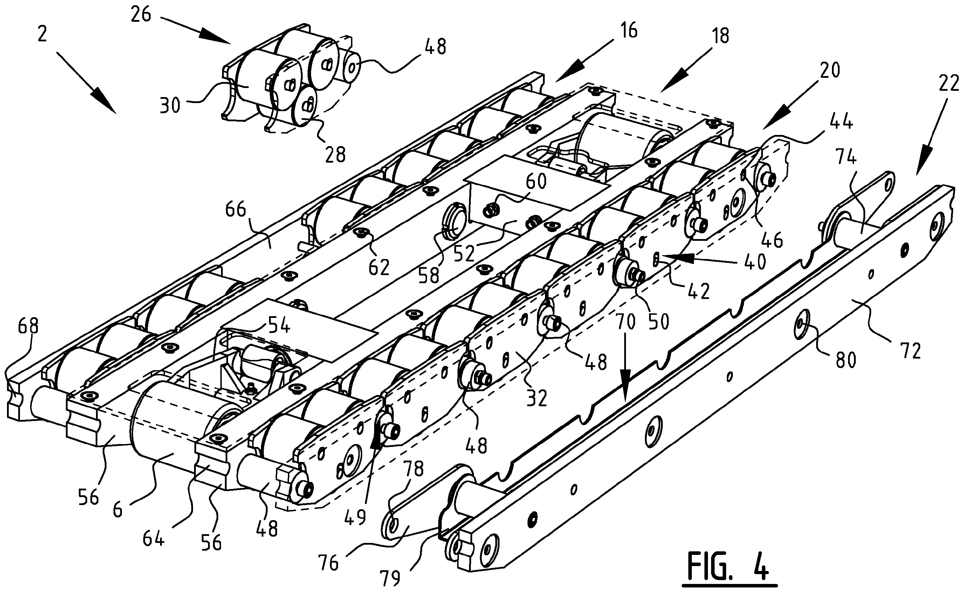

Connecting part 24 (figure 3) is constructed from a number of modules or units 26. Module 26 has a lower row of rollers 28 (figure 4) and an upper row of rollers 30, the roller surfaces of which lie against each other. Rollers 28, 30 are clamped between two side walls 32 in module 26. Loading device 2 is provided on the top side with an upper plate 34. Upper plate 34 is provided with two openings 36 at the position of support wheel 6. In addition, openings 38 are provided in upper plate 34 for the mechanism of support wheel 6.

A loading device 2 (figure 4) is provided with a first side part 16 and a second side part 20 in which modules 26 are placed. Modules 26 are provided with a lower row of rollers 28 and an upper row of rollers 30. Module 26 is further provided with two side walls 32. A recess 40 is provided in side walls 32 for shaft 42 of lower rollers 28. The lower row of rollers 28 rotate around shaft 42. Shaft 42 is movable in vertical direction in recess 40. Likewise provided for the upper row of rollers 30 are recesses 44 for shaft 46 on which rollers 30 rotate. Shaft 46 is also vertically movable in recess 44. A connecting bush 48 is situated in opening 49 between two adjacent modules 26. Some of these bushes 48 are provided with a rapid-action coupling 50 for drive 52. Drive 52 serves to actuate lowering mechanism 54 of support wheel 6. A base part 56 is situated between first side part 16 and middle part 18 and also between middle part 18 and second side part 20. Provided between these two base parts 56 is the space for support wheel 6, lowering mechanism 54 and drive 52 therefor. A conduit can be connected to nipple 60 of drive 52 via throughfeed 58. Provided on the top side of base parts 56 are fixing elements 62, for instance in the form of screws, for securing upper plate 34 to base parts 56. Both base parts 56 are provided on the outer ends with a groove 64. Groove 64 has space to receive roughly half of connecting shaft 25. Side members 66 are provided on the outer sides of side parts 16, 20. Side members 66 are likewise provided with grooves 68 on the outer ends thereof. Cable duct 22 is provided with a U-shaped gutter 70 provided on the outside with a cable duct side wall 72. Gutter 70 and side wall 72 are connected to a shaft 74. A coupling plate 76 is mounted on this shaft 74 provided at both outer ends of cable duct 22. Coupling plate 76 is provided with an opening 78 through which connecting shaft 25 can be placed. Opening 78 is aligned with grooves 64 in base parts 56 and grooves 68 in side members 66. Cables or conduits (not shown) which can be connected to coupling points 50 can be laid in cable duct 22 in order to realize control of support wheel 6 via drive 52. Side wall 72 is provided with recesses 80 for the purpose of placing connecting shafts or connecting bushes in connecting part 24, between which modules 26 are then placed.

For the assembly of a loading device 2 are first provided the base elements 56, between which are provided drive 52 with support wheel 6 and lowering mechanism 54. After arranging shafts or bushes 48 together with side members 66, modules 26 can be placed in first side part 16 and second side part 20. Upper plate 34 can then be fixed onto base parts 56. Shafts or bushes 74 are then provided on side member 66 of the second side part 20. Gutter 70, cable duct side wall 72 and coupling plate 76 are then fixed thereto. Once cable duct 22 has been provided, a connection to an adjacent loading device 2 is realized on the side thereof using shafts or bushes 81 (figure 3). Modules 26 are then placed in connecting part 24. After conduits and/or cables have been placed in cable duct 22, a cover plate 83 (figure 3) is provided on this cable duct 22. Two adjacent loading devices 2 are then connected in lengthwise direction of loading device 2 using connecting shafts 25. Loading devices 2 can rotate to some extent here relative to each other around shaft 25.

During displacement of elongate cargo 8 this cargo 8 will first be picked up by a system 14 assembled from loading devices 2. An insertion point or pick-up point 12 for pushing cargo 8 slightly upward is mounted on one outer end in lengthwise direction of system 14. During pick-up the support wheel 6 is situated in folded-away position such that lower rollers 28 are in contact with ground surface 4. Cargo 8 therefore remains at the same position relative to ground surface 4 during displacement of system 14 under cargo 8, since cargo 8 is supported by upper rollers 30 which are in rolling contact with lower rollers 28. Once cargo 8 has been fully picked up and is supported by upper rollers 30 of loading devices 2, support wheels 6 are lowered such that the contact between loading devices 2 and ground surface 4 is formed by support wheels 6. Lower rollers 28 and upper rollers 30 drop to some extent into respective recesses 40, 44 during lowering of support wheel 6. Cargo 8 hereby comes into contact with upper plate 34 and is no longer supported by upper rollers 30. During travel of system 14 using support wheels 6 cargo 8 therefore remains in a stable position on upper plate 34. System 14 is then displaced to the unloading position for cargo 8. Having arrived at this location, support wheels 6 are folded away. This means that lower rollers 28 come into contact with the ground surface, whereby upper rollers 30 will support cargo 8. System 14 is then moved over ground surface 4. Owing to the rolling contact between lower rollers 28 and upper rollers 30 cargo 8 remains in the same position relative to ground surface 4 until cargo 8 has been fully set down and is no longer supported by system 14.

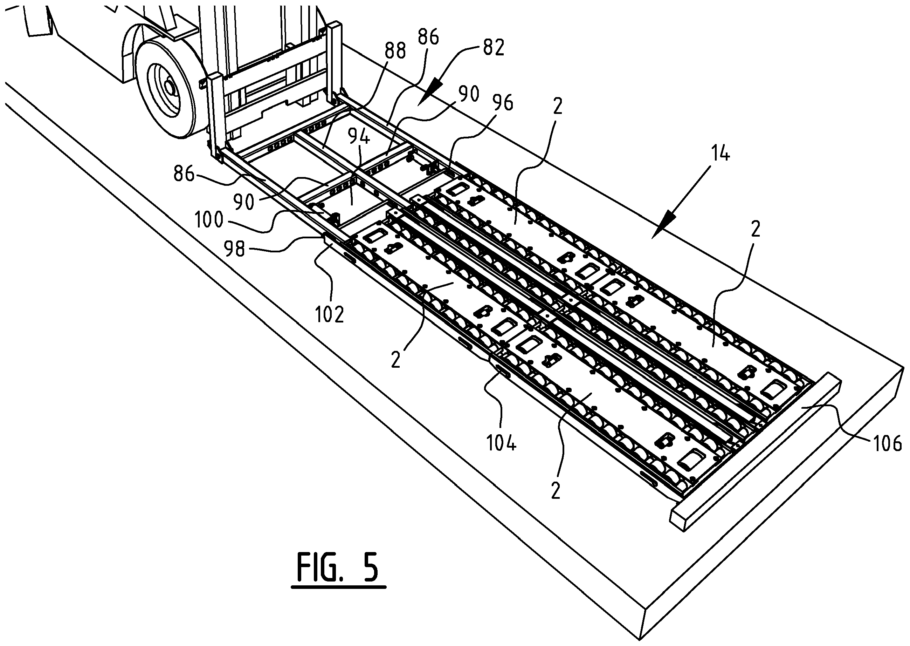

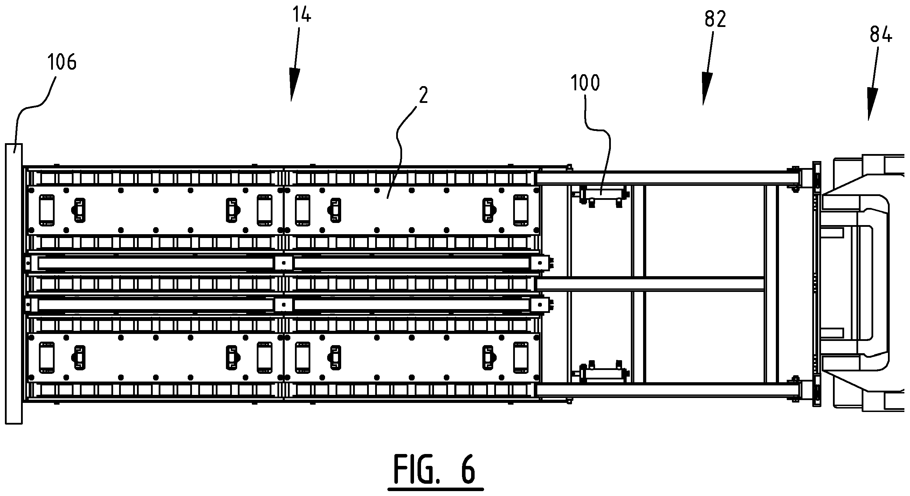

A system 14 of loading devices 2 (figures 5 and 6) is connected with a frame 82 to a lift truck 84. In the shown embodiment frame 82 consists of two longitudinal beams 86, a central beam 88, two connecting beams 90, a rear connecting beam 92 and a shaft 94. Shaft 94 is provided slidably in openings 96 in beams 86,88. Outer ends 98 of shaft 94 protrude on either side of frame 82. Shaft 94 is slidable using cylinder 100. Sliding of shaft 94 results in displacement of strips 102 in which are provided openings 104 for shafts 25 of loading devices 2. In the shown embodiment strip 102 is connected on the front side to beam 106. Support wheels 6 are driven hydraulically from lift truck 84 via hydraulic system 108. In the shown embodiment beam 106 is about 70 x 70 mm and is used for placing thereon cargo displaced using system 14. The cargo can subsequently be picked up again in simple manner for further operations. During unloading a beam is placed at the front side of the cargo. As soon as the cargo moves substantially wholly off system 14, double-action cylinders 100 are activated. These displace shaft 94, whereby strips 100 move forward and push beam 106 off a profile (not shown) so that beam 106 is provided on the rear side of the cargo.

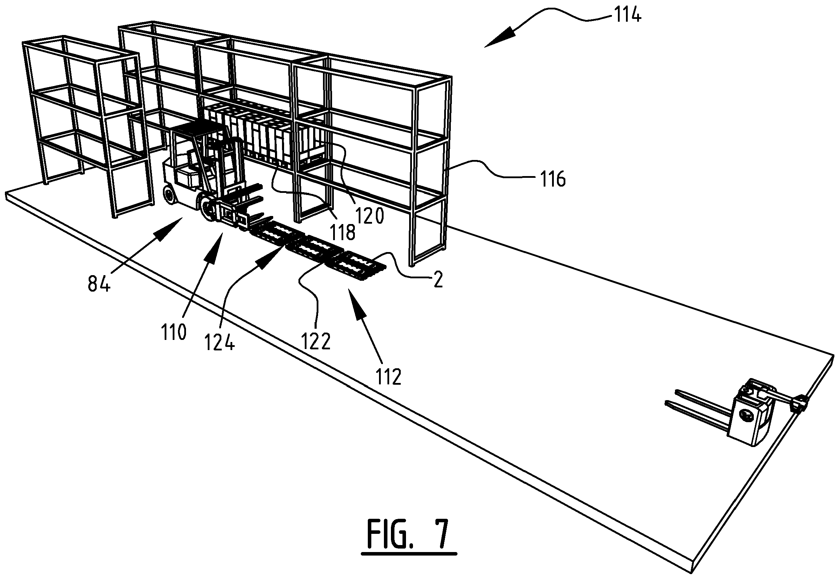

In a further embodiment a lift truck 84 (figure 7) is provided on the front side with trilateral head 110. In the shown embodiment a train 112 of pairwise connected loading devices 2 is provided on the front side of lift truck 84. Train 112 is moved by lift truck 84 into warehouse 114 with racks 116 in which pallets 118 with goods 120 are placed. In the shown embodiment loading devices 2 are coupled pairwise as in system 14. The paired loading devices 2 placed successively in series are mutually connected with connection 122 and hydraulically connected via conduit 124.

Train 112 is used for instance to pick orders in warehouse 114. A pallet 118 with goods 120 is taken out of rack 116 by lift truck 84 using head 110 and placed on the first pairwise coupled loading devices 2. Lift truck 84 is then displaced through the distance equal to the distance between the centre of two successively placed loading devices 2. Train 112 is displaced by the double roller device 28, 30 and holds pallet 118 with cargo 120 at the same position, whereby this latter is displaced to the adjacent loading device 2. Support wheel 6 is then lowered using lift truck 84 for optional further transport to the desired position where the following pallet 118 with cargo 120 is picked. As soon as the order is completed, train 112 is brought to a central position where it is placed ready for further transport. It is optionally also possible to place the order directly into a truck using lift truck 84.

The present invention is by no means limited to the above described preferred embodiment thereof. The scope of the invention is defined by the appended claims. It is thus possible for instance during coupling of two adjacent loading devices in width direction to make use of one cable duct 22, and therefore dispense with connecting part 24.

## Claims

1. Loading device (2) for displacing goods (8), comprising:
- a base frame for placing goods (8) thereon or there above;
- support wheels (6) connected to the base frame;
- at least one double roller device (26) arranged in lengthwise direction, wherein the double roller device (26) comprises a number of first roller elements (28) located a regular distance from each other and provided with a first roller surface, and a number of second roller elements (30) located above the first roller elements (28) and provided with a second roller surface, wherein during use the first roller surface lies against the second roller surface; and
- a drive (52) connected operatively to the support wheels (6) for moving the support wheels (6) substantially downward and/or upward relative to the base frame between a folded-away position in a pick-up/set-down mode such that the first roller elements (28) are in contact with a ground surface (4) and a lowered position in a travel mode such that the contact between the loading device (2) and the ground surface (4) is formed by the support wheels (6);
**characterized in that** the first and second roller elements (28, 30) are connected to the base frame for movement in substantially vertical direction in guided manner so that the second roller elements (30) protrude in selective manner above a carrying surface of the base frame, **in that** the base frame comprises at its both outer ends grooves (64, 68), wherein each groove (64, 68) has a space for receiving a portion of a longitudinal half of a connecting shaft (25)and configured for connecting the loading device to at least one second loading device using the connecting shaft(25) for connecting the loading device (2) in lengthwise direction to the second loading device (2) such that load devices (2) can rotate to some extent relative to each other around the shaft, and **in that** the drive (52) of the support wheels (6) comprises coupling means (27) for operative connection to a drive (52) of a second loading device (2) in a lengthwise direction.

2. Loading device (2) as claimed in claim 1, wherein the roller elements (28, 30) are guided in vertical direction in a guide as a result of the movement of the support wheels (6).

3. Loading device (2) as claimed in claim 1 or 2, wherein the drive (52) for moving the support wheels (6) comprises a cylinder.

4. Loading device (2) as claimed in claim 3, wherein the cylinder comprises a double-action cylinder.

5. Loading device (2) as claimed in one or more of the claims 1-4, wherein connecting elements (24, 26) are provided for connecting the loading device in width direction to a second loading device (2).

6. Loading device (2) as claimed in claim 5, wherein the connecting elements (24, 26) are provided such that, in the case of coupling the loading device (2) in width direction to a second loading device (2), a controlled play can be provided for the purpose of compensating unevenness in a ground surface.

7. Loading device (2) as claimed in one or more of the claims 1-6, wherein a guide (22) is provided in lengthwise direction and/or width direction of the base frame herein or hereon for passage of cables and/or conduits.

8. System (14) for displacing goods (8), such as a pallet or cargo, comprising a plurality of loading devices (2) as claimed in one or more of the claims 1-7.

9. Combination of vehicle (84) and train (112), wherein the train (112) comprises one or more connected loading devices (2) as claimed in one or more of the claims 1-7 and wherein the vehicle (84) is provided with coupling means for coupling the vehicle (84) to one or more loading devices (2) of said train (112).

10. Method for displacing goods (8), comprising the steps of:
- selecting the required number of loading devices (2) as claimed in one or more of the claims 1-7;
- forming a system (4) according to claim 8 or a combination of vehicle (84) and a train (112) according to claim 9; and
- displacing goods.

## Patentansprüche

1. Ladevorrichtung (2) zur Verlagerung von Waren (8) umfassend:
- ein Grundgestell zur Lagerung von Waren darauf oder darüber;
- Stützräder (6), die mit dem Grundgestell verbunden sind;
- wenigstens eine in Längsrichtung ausgerichtete Doppelrollenvorrichtung (26), wobei die Doppelrollenvorrichtung (26) mehrere erste Rollenelemente (28), die in regelmäßigem Abstand voneinander angeordnet und mit einer ersten Rollenoberfläche versehen sind, und mehrere zweite Rollenelemente (30), die oberhalb der ersten Rollenelemente (28) angeordnet und mit einer zweiten Rollenoberfläche versehen sind, umfasst, wobei die erste Rollenoberfläche während der Benutzung an der zweiten Rollenoberfläche anliegt; und
- einen Antrieb (52), der betriebsmäßig mit den Stützrädern (6) verbunden ist, um die Stützräder (6) relativ zum Grundgestell im Wesentlichen nach unten und/oder nach oben zwischen einer derart weggeklappten Position in einem Aufnahme-Absetzmodus, dass die ersten Rollenelemente (28) mit der Bodenoberfläche (4) in Kontakt sind, und einer derart abgesenkten Position im Fahrmodus, dass der Kontakt zwischen der Ladevorrichtung (2) und der Bodenoberfläche (4) durch die Stützräder (6) hergestellt wird, zu bewegen;
**dadurch gekennzeichnet,**
- **dass** die ersten und zweiten Rollenelemente (28, 30) mit dem Grundgestell zur geführten Bewegung in im Wesentlichen vertikaler Richtung derart verbunden sind, dass die zweiten Rollenelemente (30) in einer selektiven Weise über eine tragende Oberfläche des Grundgestells herausragen;
- **dass** das Grundgestell an seinen beiden Außenenden Nuten (64, 68) umfasst, wobei jede Nut (64, 68) einen Raum hat, um einen Abschnitt einer Längshälfte einer Verbindungsachse (25) aufzunehmen, und ausgestaltet ist, um die Ladevorrichtung mit wenigstens einer zweiten Ladevorrichtung durch Verwendung der Verbindungsachse (25) zum Verbinden der Ladevorrichtung (2) in Längsrichtung mit der zweiten Ladevorrichtung (2) derart zu verbinden, dass sich Ladevorrichtungen (2) in gewissem Maße relativ zu einander um die Achse drehen können; und
- **dass** der Antrieb (52) der Stützräder (6) Kopplungseinrichtungen (27) zur betriebsmäßigen Verbindung mit einem Antrieb (52) einer zweiten Ladevorrichtung (2) in einer Längsrichtung umfasst.

2. Ladevorrichtung (2) nach Anspruch 1, wobei die Rollenelemente (28, 30) in vertikaler Richtung in einer Führung als Folge der Bewegung der Stützräder (6) geführt werden.

3. Ladevorrichtung (2) nach Anspruch 1 oder 2, wobei der Antrieb (52) zur Bewegung der Stützräder (6) einen Zylinder umfasst.

4. Ladevorrichtung (2) nach Anspruch 3, wobei der Zylinder einen doppelwirkenden Zylinder umfasst.

5. Ladevorrichtung (2) nach einem oder mehreren der Ansprüche 1-4, wobei Verbindungselemente (24, 26) zur Verbindung der Ladevorrichtung in Querrichtung mit einer zweiten Ladevorrichtung (2) vorgesehen sind.

6. Ladevorrichtung (2) nach Anspruch 5, wobei die Verbindungselemente (24, 26) derart vorgesehen sind, dass, im Falle der Kopplung der Ladevorrichtung (2) in Querrichtung mit einer zweiten Ladevorrichtung (2), ein kontrolliertes Spiel zum Zweck der Ausgleichung von Unebenheiten in einer Bodenoberfläche vorgesehen werden kann.

7. Ladevorrichtung (2) nach einem oder mehreren der Ansprüche 1-6, wobei eine Führung (22) in Längsrichtung und/oder in Querrichtung in oder auf dem Grundgestell zur Durchführung von Kabeln und/oder Leitungen vorgesehen ist.

8. System (14) zur Verlagerung von Waren (8), beispielsweise eine Palette oder Fracht, mehrere Ladevorrichtungen (2) nach einem oder mehreren der Ansprüche 1-7 umfassend.

9. Kombination von Fahrzeug (84) und Zug (112), wobei der Zug (112) eine oder mehrere verbundene Ladevorrichtungen (2) nach einem oder mehreren der Ansprüchen 1-7 umfasst und wobei das Fahrzeug (84) mit Kopplungseinrichtungen für das Koppeln des Fahrzeugs (84) mit einer oder mehrerer Ladevorrichtungen (2) des besagten Zuges (112) ausgestattet ist.

10. Verfahren zur Verlagerung von Waren (8), die Schritte umfassend:
- Auswählen der erforderlichen Anzahl an Ladevorrichtungen (2) nach einem oder mehreren der Ansprüche 1-7;
- Zusammenstellen eines Systems (14) nach Anspruch 8 oder einer Kombination eines Fahrzeugs (84) und eines Zuges (112) nach Anspruch 9; und
- Verlagern von Waren.

## Revendications

1. Dispositif de chargement (2) destiné à déplacer des marchandises (8), comprenant :
- un bâti de base destiné à placer des marchandises (8) dessus ou pardessus;
- des roues de support (6) reliées au bâti de base ;
- au moins un dispositif à double rouleaux (26) agencé dans la direction longitudinale, dans lequel le dispositif à double rouleaux (26) comprend un certain nombre de premiers éléments formant rouleau (28) situés à une distance régulière l'un de l'autre et comportant une première surface de rouleau, et un certain nombre de seconds éléments formant rouleau (30) situés au-dessus des premiers éléments formant rouleau (28) et comportant une seconde surface de rouleau, dans lequel, en cours d'utilisation, la première surface de rouleau repose contre la seconde surface de rouleau ; et
- un dispositif d'entraînement (52) relié de manière opérationnelle aux roues de support (6) afin de déplacer les roues de support (6) sensiblement vers le bas et/ou vers le haut par rapport au bâti de base entre une position repliée à l'écart dans un mode d'enlèvement/dépose de telle manière que les premiers éléments formant rouleau (28) sont en contact avec la surface du sol (4) et une position abaissée dans un mode de déplacement de telle sorte que le contact entre le dispositif de chargement (2) et la surface du sol (4) est formé par des roues de support (6) ;
**caractérisé en ce que** les premier et second éléments formant rouleau (28, 30) sont reliés au bâti de base afin de se déplacer dans une direction sensiblement verticale d'une manière guidée de telle sorte que les seconds éléments formant rouleau (30) s'étendent d'une manière sélective au-dessus d'une surface de transport du bâti de base,
**en ce que** le bâti de base comprend, au niveau de ses deux extrémités externes, des rainures (64, 68), dans lequel chaque rainure (64, 68) présente un espace destiné à recevoir une partie d'une moitié longitudinale d'un arbre de liaison (25) et configuré de manière à relier le dispositif de chargement à au moins un second dispositif de chargement en utilisant l'arbre de liaison (25) afin de relier le dispositif de chargement (2) dans la direction longitudinale au second dispositif de chargement (2) de telle sorte que les dispositifs de chargement (2) peuvent tourner dans une certaine mesure l'un par rapport à l'autre autour de l'arbre, et **en ce que** le dispositif d'entraînement (52) des roues de support (6) comprend un moyen de couplage (27) destiné à assurer une liaison opérationnelle à un dispositif d'entraînement (52) d'un second dispositif de chargement (2) dans une direction longitudinale.

2. Dispositif de chargement (2) selon la revendication 1, dans lequel les éléments formant rouleau (28, 30) sont guidés dans la direction verticale suivant un guide à la suite du déplacement des roues de support (6).

3. Dispositif de chargement (2) selon la revendication 1 ou 2, dans lequel le dispositif d'entraînement (52) destiné à déplacer les roues de support (6) comprend un vérin.

4. Dispositif de chargement (2) selon la revendication 3, dans lequel le vérin comprend un vérin à double action.

5. Dispositif de chargement (2) selon une ou plusieurs des revendications 1 à 4, dans lequel des éléments de liaison (24, 26) sont agencés afin de relier le dispositif de chargement dans la direction transversale à un second dispositif de chargement (2).

6. Dispositif de chargement (2) selon la revendication 5, dans lequel les éléments de liaison (24, 26) sont agencés de telle sorte que, dans le cas du couplage du dispositif de chargement (2) dans la direction transversale à un second dispositif de chargement (2), un jeu commandé peut être formé dans le but de compenser des irrégularités à la surface du sol.

7. Dispositif de chargement (2) selon une ou plusieurs des revendications 1 à 6, dans lequel un guide (22) est agencé dans la direction longitudinale et/ou la direction transversale du bâti de base dans ou sur celui-ci afin d'assurer le passage de câbles et/ou conduits.

8. Dispositif (14) destiné à déplacer des marchandises (8), telles qu'une palette ou un chargement, comprenant une pluralité de dispositifs de chargement (2) selon une ou plusieurs des revendications 1 à 7.

9. Association de véhicule (84) et de train (112), dans lequel le train (112) comprend un ou plusieurs dispositifs de chargement (2) reliés, selon une ou plusieurs des revendications 1 à 7, et dans lequel le véhicule (84) comporte des moyens de couplage destinés à coupler le véhicule (84) à un ou plusieurs dispositifs de chargement (2) dudit train (112).

10. Procédé de déplacement de marchandises (8), comprenant les étapes de :
- sélection du nombre requis de dispositifs de chargement (2) selon une ou plusieurs des revendications 1 à 7 ;
- formation d'un dispositif (4) selon la revendication 8 ou d'une association de véhicule (84) et d'un train (112) selon la revendication 9 ; et
- déplacement des marchandises.
